(19)

Europäisches
Patentamt
European
Patent Office
Office européen
des brevets

(11) **EP 2 940 593 A1**

(12) **EUROPEAN PATENT APPLICATION**

(43) Date of publication:
**04.11.2015 Bulletin 2015/45**

(51) Int Cl.:
*G06F 13/42* *(2006.01)*

(21) Application number: **15163300.5**

(22) Date of filing: **13.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **30.04.2014 KR 20140052818**

(71) Applicant: **Samsung Electronics Co., Ltd
Gyeonggi-do 443-742 (KR)**

(72) Inventor: **Jeon, Jinyong
443-803 Gyeonggi-do (KR)**

(74) Representative: **Grünecker Patent- und
Rechtsanwälte
PartG mbB
Leopoldstraße 4
80802 München (DE)**

(54) **METHOD AND APPARATUS FOR GENERATING SLAVE DEVICE IDENTIFIER**

(57)  A slave controller including an impedance element, and a processor configured to generate an identifier of the slave controller based on an electrical value of electric energy entering the impedance element.

# FIG. 1

**Description**

BACKGROUND

1. Field

The following description relates to a method and an apparatus for generating an identifier (ID) of a slave device.

2. Description of Related Art

A multi-slave system may include a single master controller and multiple slave controllers. The master controller controls the multiple slave controllers, and thus integrative control may be performed on multiple devices to be controlled by the multiple slave controllers. The multi-slave system is widely used in various fields. For example, in an energy storing system, the multi-slave system may be applied to a battery pack having a multi-module structure in which battery modules are connected in series or parallel. The master controller and the slave controller may include a master battery management system (BMS) and a slave BMS, respectively. The master BMS may communicate with slave BMSs and manage data on a battery module controlled by each slave BMS to control the battery modules.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one general aspect, a slave controller includes an impedance element; and a processor configured to generate an identifier of the slave controller based on an electrical value of electric energy entering the impedance element.
The electrical value may be a voltage, and the processor may be further configured to calculate the identifier by multiplying a voltage of the electric energy entering the impedance element by a predetermined value.
The slave controller may further include a connector configured to connect the slave controller to another slave controller.
The connector may be further configured to connect, in series, the impedance element of the slave controller to an impedance element of the other slave controller.
A difference between an impedance value of the impedance element of the slave controller and an impedance value of the impedance element of the other slave controller may be less than or equal to a predetermined threshold.
A difference between the identifier of the slave controller and an identifier of the other slave controller may correspond to a difference between the electrical value of the electric energy entering the impedance element of the slave controller and an electrical value of electric energy entering the impedance element of the other slave controller.
The processor may be further configured to transmit the identifier to a master controller.
The slave controller may further include a storage configured to store the identifier.
The processor may be further configured to generate the identifier in response to the slave controller being driven.
The processor may be further configured to generate the identifier at a predetermined point in time after the slave controller is driven.
In another general aspect, a slave controller in a slave terminal includes a processor configured to generate an identifier of the slave controller based on an electrical value of electric energy entering the slave controller from another slave controller in the slave terminal.
The slave controller may further include an impedance element into which the electric energy enters from the other slave controller; and the processor may be further configured to measure an electrical value in response to the electric energy entering the impedance element, and generate the identifier based on the measured electrical value.
The slave controller may be connected to the other slave controller so that the electric energy enters the impedance element of the slave controller via an impedance element of the other slave controller.
The slave controller may further include a ground unit configured to electrically ground the electric energy; the slave controller may be connected to the other slave controller so that the electric energy enters a first terminal of the impedance element; and the ground unit may be connected to a second terminal of the impedance element.
The electrical value may be a voltage; and the processor may be further configured to calculate the identifier by multiplying the voltage by a predetermined value.
In another general aspect, a slave controller includes a power supplier configured to supply electric energy; and a processor configured to generate an identifier of the slave controller based on an electrical value of the electric energy in the slave controller.
The slave controller may further include an impedance element into which the electric energy enters; and the processor may be further configured to measure an electrical value in response to the electric energy entering the impedance element, and generate the identifier based on the measured electrical value.

The slave controller and another slave controller may be in a slave terminal; and the slave controller may be connected to the other slave controller so that the electric energy enters an impedance element of the other slave controller via the impedance element of the slave controller.

The slave controller and another slave controller may be in a slave terminal; a first terminal of the impedance element of the slave controller may be connected to the power supplier of the slave controller; and a second terminal of the impedance element of the slave controller may be connected to an impedance element of the other slave controller.

The electrical value may be a voltage; and the processor may be further configured to calculate the identifier by multiplying the voltage by a predetermined value.

In another general aspect, a battery management system (BMS) includes slave BMSs; and a master BMS configured to control the slave BMSs; wherein an Nth slave BMS among the slave BMSs includes a processor configured to generate an identifier of the Nth slave BMS based on an electrical value of electric energy entering the Nth slave BMS from any other slave BMS among the slave BMSs.

Each of the slave BMSs may be configured to transmit a respective identifier of the slave BMS generated by the slave BMS to the master BMS.

The master BMS may be further configured to identify each of the slave BMSs based on the respective identifiers transmitted by the slave BMSs.

Other features and aspects will be apparent from the following detailed description, the drawings, and the claims.

BRIEF DESCRIPTION OF THE DRAWINGS

FIG. 1 illustrates an example of a multi-slave system.

FIG. 2 illustrates an example of a slave controller.

FIG. 3 illustrates another example of a slave controller.

FIG. 4 illustrates an example of an operation of slave controllers.

FIG. 5 illustrates an example of an equivalent circuit when slave controllers are connected in series.

FIG. 6 illustrates an example of an identifier (ID) of a slave controller.

FIGS. 7 and 8 illustrates examples of connecting slave battery management systems (BMSs) based on a number of battery modules.

FIG. 9 illustrates an example of an operation of a master BMS and a slave BMS.

FIG. 10 illustrates an example of an operating method of a slave controller.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

Throughout the drawings and the detailed description, the same reference numerals refer to the same elements. The drawings may not be to scale, and the relative size, proportions, and depiction of elements in the drawings may be exaggerated for clarity, illustration, and convenience.

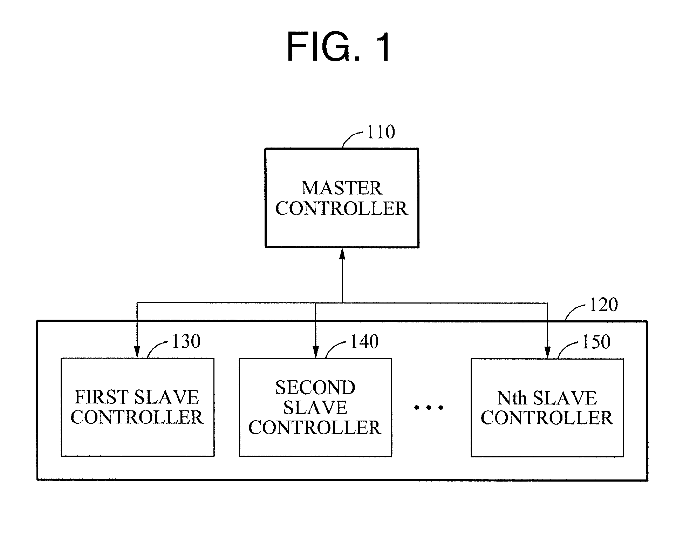

FIG. 1 illustrates an example of a multi-slave system.

Referring to FIG. 1, the multi-slave system includes a master controller 110 and slave controllers, for example, 130 through 150. A configuration of the master controller 110 and a configuration of each of the slave controllers 130 through 150 may be the same or different. When the configurations are the same, the master controller 110 and the slave controllers 130 through 150 may be classified based on their software. For example, a device having an operating mode of a master mode may be the master controller 110 among controllers having a same configuration, and devices having an operating mode of a slave mode may be the slave controllers 130 through 150.

Each slave controller controls at least one device to be controlled. The at least one device to be controlled may be all devices that may be controlled by the slave controllers 130 through 150, for example, a battery pack and a storage. For example, when the device to be controlled is the battery pack, the battery pack may include battery modules and each slave controller may control at least one battery module.

The master controller 110 is a main controller of the slave controllers 130 through 150, and the slave controllers 130 through 150 comply with control instructions from the master controller 110. In one example, the master controller 110 identifies each of the slave controllers 130 through 150 based on identifiers (IDs) of the slave controllers 130 through 150.

The master controller 110 and the slave controllers 130 through 150 communicate with each other through a wired or a wireless interface. For example, the master controller 110 may control the slave controllers 130 through 150 by performing one-to-N communication with the slave controllers 130 through 150, or one-to-one communication with each slave controller.

The master controller 110 may control the slave controllers 130 through 150 to control on and off states, operations, parameters, communication, and error detection. For example, when the device to be controlled is the battery pack, the master controller 110 may control on and off states, charging and discharging, measuring and monitoring of electrical feature values, switching, and equalization of the battery modules through the slave controllers 130 through 150.

The slave controllers 130 through 150 may be included in a slave terminal 120. The slave terminal 120 may include only the slave controllers 130 through 150 receiving the control by the master controller 110. Also, the slave terminal 120 may include a housing accommodating the slave controllers 130 through 150 as well as other structural or functional components.

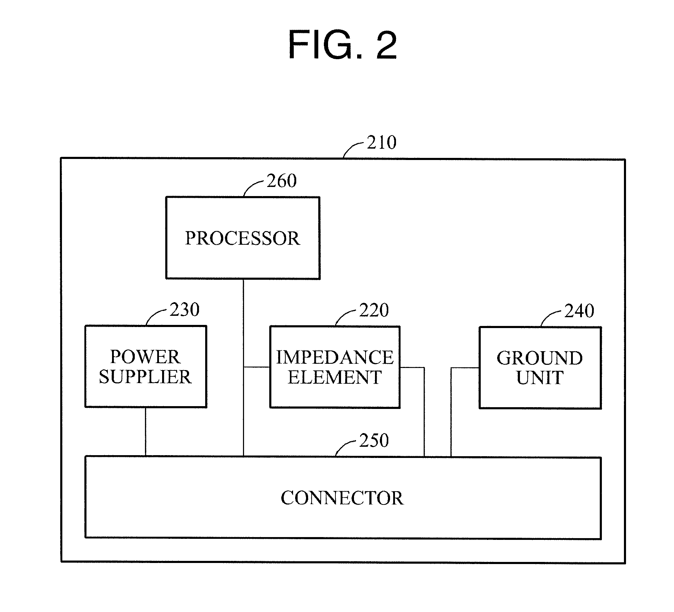

FIG. 2 illustrates an example of a slave controller.

Referring to FIG. 2, a slave controller 210 includes an impedance element 220, a power supplier 230, a ground unit 240, a connector 250, and a processor 260.

The slave controller 210 may be one of a plurality of slave controllers included in a slave terminal. A master controller controls each slave controller included in the slave terminal. Each slave controller generates an ID and transmits the ID to the master controller. The master controller may identify each slave battery management system (BMS) using an ID generated by respective slave BMSs.

Electric energy is supplied to the impedance element 220 from the power supplier 230 or any one of the slave controllers included in the slave terminal. The impedance element 220 may be any one or any combination of a resistor, an inductor, and a capacitor.

The power supplier 230 supplies electric energy to the impedance element 220 or an impedance element of another slave controller included in the slave terminal. The power supplier 230 may be direct current (DC) or alternating current (AC) power. In one example, the power supplier 230 supplies, to the impedance element 220, electric energy suitable for a characteristic of the impedance element 220 using any one or any combination of a DC-AC inverter, an AC-DC converter, and a voltage regulator. Also, the power supplier 230 may supply electric energy to drive the slave controller 210.

The ground unit 240 electrically grounds electric energy supplied from the power supplier 230 or a power supplier of another slave controller included in the slave terminal.

The connector 250 connects the impedance element 220 to any one or any combination of the power supplier 230, the ground unit 240, and an impedance element of another slave controller included in the slave terminal based on a control by the processor 260 or an external connection.

When the slave controllers included in the slave terminal are connected to one another, the electric energy may be supplied from any one of the slave controllers included in the slave terminal, and grounded in any other one of the slave controllers included in the slave terminal. Thus, the slave controllers included in the slave terminal may form a closed loop including a single power supplier, a plurality of impedance elements, and a single ground unit.

The processor 260 generates an ID of the slave controller 210 based on an electrical value of the electric energy supplied from any one of the slave controllers included in the slave terminal or the power supplier 230 to the slave controller 210. For example, the processor 260 may be included in a microcontroller unit (MCU).

The processor 260 measures the electrical value when the electric energy enters the impedance element 220, and generates the ID based on the measured electrical value.

In one example, an electrical value measured when electric energy enters an impedance element may be different in the slave controllers based on an order of the slave controllers in the slave terminal. For example, when the slave terminal includes four slave controllers, first through fourth slave controllers are connected in series, and a power supplier of the first slave controller supplies electric energy to impedance elements of the first through fourth slave controllers, a voltage of electric energy to be supplied to the fourth slave controller will decrease as the electric energy passes through the first to third slave controllers. Accordingly, voltages of the electric energy entering the impedance elements of the slave controllers will be different. A processor of each slave controller measures a voltage of electric energy entering the impedance element of the slave controller. For example, the processor of the first slave controller measures the voltage of electric energy entering the impedance element of the first slave controller, the processor of the second slave controller measures the voltage of electric energy entering the impedance element of the second slave controller, and so forth.

A voltage of electric energy entering an impedance element of each slave controller may be represented by the following Equation 1.

[Equation 1]

$$V_n = V_S \times \frac{(N + 1) - n}{N}$$

In Equation 1, "Vn" denotes a voltage of electric energy entering an impedance element of an Nth slave controller. "Vs" denotes a voltage of electric energy supplied to all impedance elements of slave controllers in a slave terminal. "N" denotes a total number of the slave controllers in the slave terminal, and "n" denotes an order of the slave controller in the slave terminal. For example, when there are four slave controllers arranged in an order of first controller to fourth controller, "n" = 1 for the first slave controller, "n" = 2 for the second slave controller, "n" = 3 for the third slave controller, and "n" = 4 for the fourth slave controller. For example, when a voltage of electric energy supplied by a power supplier of a first slave controller to first through fourth slave controllers is 4 volts (V), voltages entering each impedance element of the first through fourth slave controllers are 4V, 3V, 2V, and 1 V, respectively. Each processor of the first through fourth slave controllers measures the respective voltage of the electric energy entering the respective impedance element of the respective slave controller.

The processor 260 generates the ID using the measured voltage. In one example, the processor 260 calculates the ID of the slave controller 210 by multiplying the voltage of the electric energy entering the impedance element 220 by a predetermined value. Accordingly, a difference between the ID of the slave controller 210 and an ID of another slave controller included in the slave terminal is a difference between a voltage of the electric energy entering the slave controller 210 and a voltage of electric energy entering the other slave controller included in the slave terminal. In one example, the predetermined value may include a number of controller area network (CAN) ID bits. For example, when the CAN ID has 11 bits, the processor 260 may multiply the voltage of the electric energy entering the impedance element 220 by $2^{11}$ to calculate the ID of the slave controller 210. As another example, when the CAN ID has 29 bits, the processor 260 may multiply the voltage of the electric energy entering the impedance element 220 by $2^{29}$ to calculate the ID of the slave controller 210. The number of the CAN ID bits is merely one example of the predetermined value, and the predetermined value may be another number by which a voltage may be multiplied.

In one example, the processor 260 generates the ID of the slave controller 210 using the voltage of the electric energy entering the impedance element 220 and voltages of electric energy supplied to all impedance elements of the slave controllers. For example, when the electric energy enters the impedance element 220 from a first slave controller, the processor 260 receives voltage information about the electric energy supplied by the first slave controller through communication with the first slave controller. The processor 260 calculates a voltage ratio of the voltage of the electric energy entering the impedance element 220 to the voltages of the electric energy supplied to all the impedance elements of the slave controllers, and generates the ID of the slave controller 210 by multiplying the calculated voltage ratio by the predetermined value.

The processor 260 may generate the ID of the slave controller 210 without a command by a master controller. Also, the processor 260 may generate the ID of the slave controller 210, and thus an amount of time used to establish a system between the master controller and the slave controllers may be reduced.

The processor 260 may transmit the generated ID to the master controller through a wired or a wireless interface. The slave controller 210 may include a storage to store the generated ID. The storage may be included in the processor 260 or may be separate from the processor 260.

When the slave controller 210 is driven, the processor 260 may generate the ID. For example, when the slave controller 210 controls at least one of a plurality of battery modules installed in an electric vehicle, the slave controller 210 may be driven and the processor 260 may generate the ID at a time an ignition switch of the electric vehicle is turned on.

In another example, the processor 260 may generate the ID at a point in time after the slave controller 210 is driven. The processor 260 may generate an ID at each predetermined point in time, and transmit the generated ID to the master controller. The master controller may detect whether an error is discovered in the slave controller 210 at each predetermined point in time using the ID received at each predetermined point in time. For example, when the predetermined point in time is 1 hour, which may indicate a predetermined time interval, the processor 260 may generate an ID every 1 hour after the slave controller 210 is driven and transmit the ID to the master controller. The master controller may compare the ID received when the slave controller 210 is driven to the ID received at the predetermined point in time, and detect whether an error has occurred in the slave controller 210.

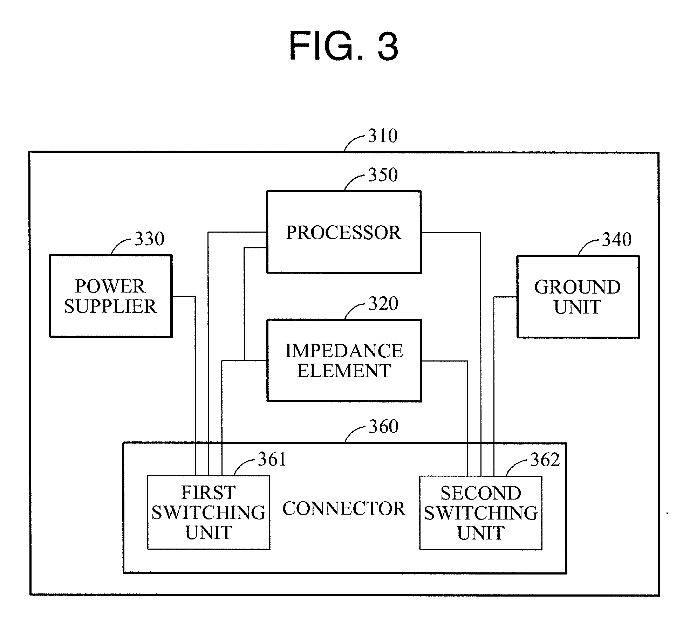

FIG. 3 illustrates another example of a slave controller.

Referring to FIG. 3, a slave controller 310 includes an impedance element 320, a power supplier 330, a ground unit 340, a processor 350, and a connector 360. The connector 360 includes a first switching unit 361 and a second switching unit 362.

The slave controller 310 is one of a plurality of slave controllers included in a slave terminal.

Electric energy enters the impedance element 320 from the power supplier 330 or any one of the slave controllers included in the slave terminal.

The power supplier 330 supplies the electric energy to the impedance element 320 or an impedance element of another slave controller included in the slave terminal.

The ground unit 340 electrically grounds the electric energy supplied from the power supplier 330 or a power supplier of another slave controller included in the slave terminal.

The processor 350 controls the connector 360 to connect the impedance element 320 to at any one or more of the power supplier 330, the ground unit 340, and an impedance element of another slave controller included in the slave terminal. In one example, the processor 350 may control the first switching unit 361 and the second switching unit 362 based on an order of the slave controller 310 in the slave terminal.

For example, when N slave controllers are included in the slave terminal and the order of the slave controller 310 is that the slave controller 310 is the first slave controller, the processor 350 controls the first switching unit 361 to connect the impedance element 320 to the power supplier 330, and controls the second switching unit 362 to connect the impedance element 320 to an impedance element of a second slave controller. As another example, when the order of the slave controller 310 is that the slave controller 310 is the (N-1)th slave controller, the processor 350 controls the first switching unit 361 to connect the impedance element 320 to an impedance element of an (N-2)th slave controller, and controls the second switching unit 362 to connect the impedance element 320 to an impedance element of an Nth slave controller. As still another example, when the order of the slave controller 310 is that the slave controller 310 is the Nth slave controller, the processor 350 controls the first switching unit 361 to connect the impedance element 320 to an impedance element of the (N-1)th slave controller, and controls the second switching unit 362 to connect the impedance element 320 to the ground unit 340.

When the slave controllers included in the slave terminal are connected to one another, the slave controllers included in the slave terminal form a closed loop including a single power supplier, a plurality of impedance elements, and a single ground unit. The processor 350 generates the ID of the slave controller 310 based on an electrical value of electric energy entering the slave controller 310 from any one of the slave controllers included in the slave terminal or the power supplier 330.

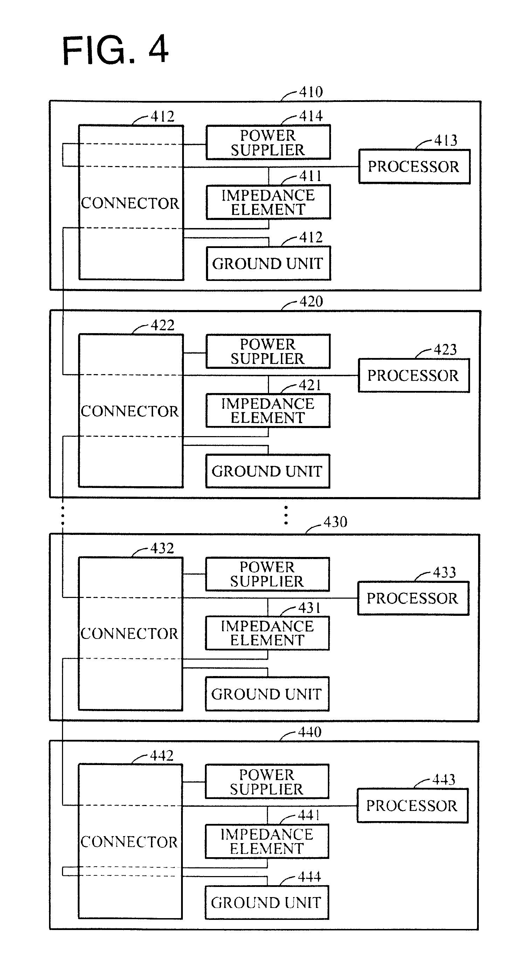

FIG. 4 illustrates an example of an operation of slave controllers.

Referring to FIG. 4, slave controllers, for example, 410 through 440, are connected to one another. Each slave controller includes a power supplier, an impedance element, a ground unit, a connector, and a processor. Impedance values of impedance elements, for example, 411, 421, 431, and 441, may be the same, or may be different. When the impedance values are different, a difference between the impedance values may be less than or equal to a predetermined threshold.

Each connector, for example, 412, 422, 432, and 442, of the slave controllers 410 through 440 connect respective impedance elements of the slave controllers 410 through 440 to one or more of respective power suppliers, respective ground units, and an impedance element of another slave controller, based on control by respective processors or an external connection.

For example, the connector 412 of the slave controller 410 connects the power supplier 414 to a front end of the impedance element 411, and connects the impedance element 421 to a back end of the impedance element 411.

The connector 422 of the slave controller 420 connects the impedance element 411 to a front end of the impedance element 421, and connects the impedance element 431 to a back end of the impedance element 421.

The connector 432 of the slave controller 430 connects the impedance element 421 to a front end of the impedance element 431, and connects the impedance element 441 to a back end of the impedance element 431.

The connector 442 of the slave controller 440 connects the impedance element 431 to a front end of the impedance element 441, and connects a ground unit 444 to a back end of the impedance element 441. Accordingly, the closed loop is formed by connecting, in series, the power supplier 414, the impedance elements 411, 421, 431, and 441, and the ground unit 444.

The power supplier 414 supplies electric energy to the impedance elements 411, 421, 431, and 441. Although the same current may enter the impedance elements 411, 421, 431, and 441, a voltage of the electric energy entering an impedance element drops as the electric energy passes through the impedance elements 411, 421, 431, and 441. Thus, voltages of the electric energy entering the impedance elements 411, 421, 431, and 441 are different.

Each processor, for example, 413, 423, 433, and 443, measures a voltage of electric energy entering respective impedance elements of the slave controllers 410 through 440.

For example, when the impedance elements 411, 421, 431, and 441 are resistors, the power supplier 414 may supply DC power to the impedance elements 411, 421, 431, and 441, and each of the processors 413, 423, 433, and 443 may measure a voltage of the DC power entering a corresponding resistor.

As another example, when the impedance elements 411, 421, 431, and 441 are inductors, the power supplier 414 may supply AC power having a variable current to the impedance elements 411, 421, 431, and 441. The processors 413, 423, 433, and 443 may include analog-to-digital converters, and may measure a voltage of the AC power entering a corresponding inductor using a corresponding the analog-to-digital converter.

As still another example, when the impedance elements 411, 421, 431, and 441 are capacitors, the power supplier 414 may supply AC power having a variable voltage to the impedance elements 411, 421, 431, and 441. The processors 413, 423, 433, and 443 may include respective analog-to-digital converters, and may measure a voltage of the AC power entering a corresponding capacitor using a corresponding analog-to-digital converter.

Also, the processors 413, 423, 433, and 443 may calculate an ID by multiplying the measured voltage by a predetermined value. For example, when a voltage of the electric energy entering each of the impedance elements 411, 421, 431, and 441 is 4 V, 3 V, 2 V, and 1 V, respectively, the processor 413 calculates the ID of the slave controller 410 as 4000, the processor 423 calculates an ID of the slave controller 420 as 3000, the processor 433 calculates an ID of the slave controller 430 as 2000, and the processor 443 calculates an ID of the slave controller 440 as 1000. Thus, the ID value of each of the slave controllers 410 through 440 may is proportional to the voltage of the electric energy entering each impedance element.

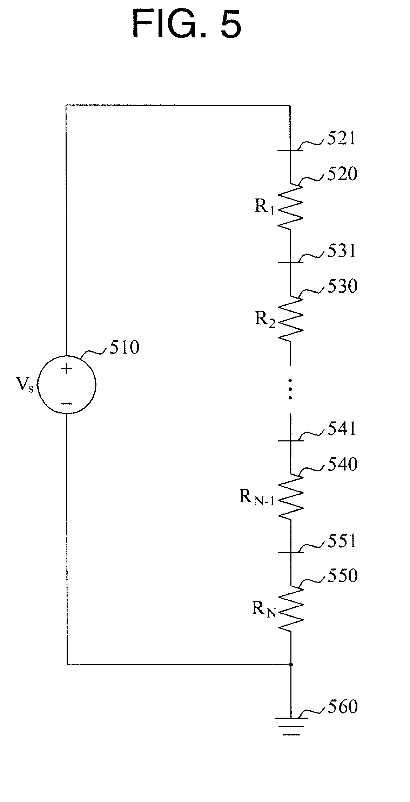

FIG. 5 illustrates an example of an equivalent circuit when slave controllers are connected in series.

Referring to FIG. 5, N slave controllers are connected in series. In the example in FIG. 5, a power supplier 510 and a resistor ($R_1$) 520 of a first slave controller, a resistor ($R_2$) 530 of a second slave controller, and a resistor ($R_{N-1}$) 540 of an (N-1)th slave controller, and a resistor ($R_N$) 550 and a ground unit 560 of an Nth slave controller are connected in series. The power supplier 510 supplies DC power to the resistors 520, 530, 540, and 540, and a processor of each of the N slave controllers measures a voltage of the DC power entering a corresponding resistor. For example, corresponding processors of the first slave controller, the second slave controller, the (N-1)th slave controller, and the Nth slave controller measure the DC power at a front end 521 of the $R_1$ 520, a front end 531 of the $R_2$ 530, a front end 541 of the $R_{N-1}$ 540, and a front end 551 of the $R_N$ 550, respectively, and calculate an ID of the corresponding slave controller by multiplying the measured power by a predetermined value.

For example, when the number of slave controllers is four, resistors of the slave controllers have a resistance of 1 ohm ($\Omega$), and the power supplier 510 outputs DC power of 16 watts (W), a current entering the resistors 520, 530, 540, and 550 is 2 amperes (A) and a voltage applied to each of the resistors 520, 530, 540, and 550 is 2 V. Thus, voltages measured at the front end 521 of the $R_1$ 520, the front end 531 of the $R_2$ 530, the front end 541 of the $R_{N-1}$ 540, and the front end 551 of the $R_N$ 550 are 8 V, 6 V, 4 V, and 2 V, respectively.

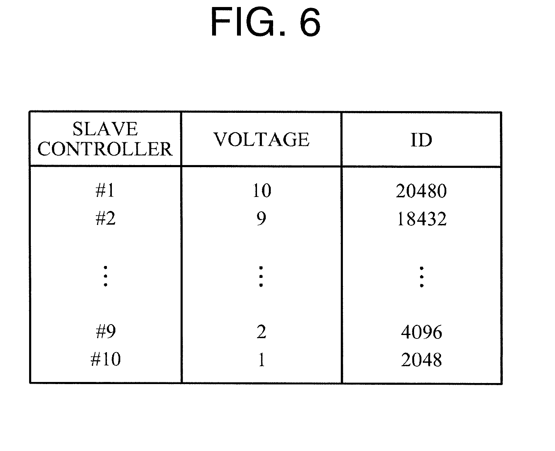

FIG. 6 illustrates an example of an ID of a slave controller.

Referring to FIG. 6, the ID of the slave controller may be calculated by multiplying a voltage of electric energy entering an impedance element of the slave controller by a predetermined value. For example, when 10 slave controllers are connected in series and electric energy having a voltage of 10 V enters an impedance element of a first slave controller of the 10 slave controllers, a processor of the first slave controller measures the voltage of 10 V at a front end of the impedance element of the first slave controller, a processor of a second slave controller measures a voltage of 9 V at a front end of an impedance element of the second slave controller, and a processor of a 10th slave controller measures a voltage of 1 V at a front end of an impedance element of the 10th slave controller. When a number of CAN ID bits is 11 bits, each processor of the 10 slave controllers may multiply the measured voltage by a predetermined value of $2^{11}$ to generate a corresponding ID. Thus, a size of the ID of each of the 10 slave controllers is proportional to the voltage measured at each slave controller.

Each processor of the 10 slave controllers may store the generated ID. Also, each processor of the 10 slave controllers may transmit the generated ID to a master controller using a wired or a wireless interface. The master controller identifies each slave controller using IDs received from the 10 slave controllers. For example, the master controller may identify a slave controller having a greatest ID size to be the first slave controller, and a slave controller having a smallest ID size to be the 10th slave controller.

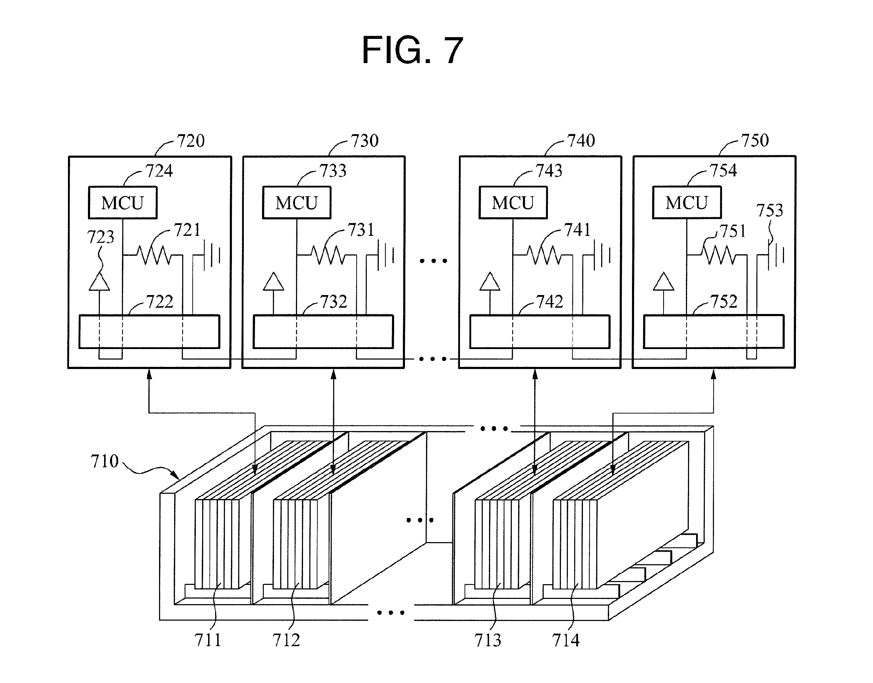

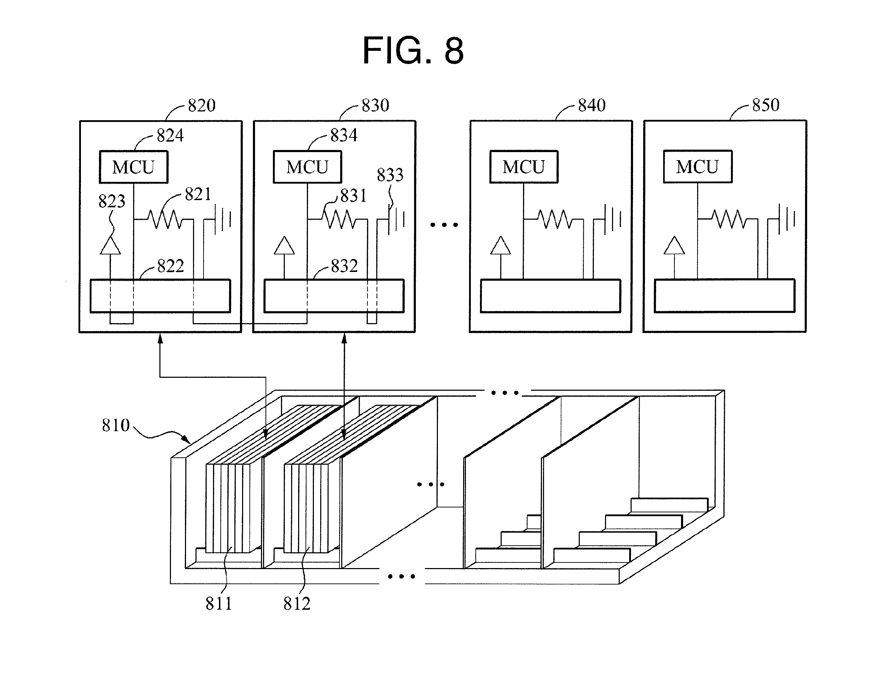

FIGS. 7 and 8 illustrate examples of connecting slave BMSs based on a number of battery modules.

Referring to FIG. 7, a battery pack 710 is provided to a driving means, for example, an electric vehicle, and provides electric energy used to drive the driving means. The battery pack 710 includes N slots accommodating N battery modules, for example, 711 through 714. FIG. 7 illustrates an example in which the N battery modules 711 through 714 are installed in the N slots of the battery pack 710.

N slave BMSs, for example, 720 through 750, control the N battery modules 711 through 714, and a master BMS controls the N slave BMSs 720 through 750.

Each of the N slave BMSs 720 through 750 includes a power supplier, an impedance element, a ground, a connector, and an MCU. The N slave BMSs 720 through 750 are connected to one another. In the example in FIG 7, a connector 722 of a first slave BMS 720 connects a power supplier 723 to a front end of a resistor 721, and connects a resistor 731 of a second slave BMS 730 to a back end of the resistor 721 through a connector 732 of the second slave BMS 730. The connector 732 of the second slave BMS 730 connects the resistor 721 of the first slave BMS 720 to a front end of the resistor 731, and connects a resistor of a third slave BMS (not shown) to a back end of the resistor 731. Resistors of the third through an (N-2)th slave BMSs (not shown) are connected in series. A connector 742 of an (N-1)th slave BMS 740 connects a resistor of the (N-2)th slave BMS (not shown) to a front end of a resistor 741, and connects a resistor 751 of an Nth slave BMS 750 to a back end of the resistor 741. A connector 752 of the Nth slave BMS 750 connects the resistor 741 of the (N-1)th slave BMS 740 to a front end of the resistor 751, and connects a ground 753 to a back end of the resistor 751.

When the driving means is started, the N slave BMSs 720 through 750 are driven. When the N slave BMSs 720 through 750 are driven, the MCU of each of the N slave BMSs 720 through 750 generates a corresponding ID of the N slave BMSs 720 through 750. Also, respective MCUs 724, 733, 743, and 754 of the N slave BMSs 720 through 750 generate the IDs at a predetermined point in time after the N slave BMSs 720 through 750 are driven. For example, the MCUs 724, 733, 743, and 754 of the slave BMSs 720 through 750 may generate the IDs at an interval of one hour after the N slave BMSs 720 through 750 are driven.

Through the connection between the N slave BMSs 720 through 750, the power supplier 723 supplies DC power to the resistors 721, 731, 741, and 751. In the example of FIG. 7, DC power entering the resistor 751 enters the resistor 751 via the resistors 721, 731, and 741.

The MCUs 724, 733, 743, and 754 of the N slave BMSs 720 through 750 measure a voltage of the DC power entering each resistor included in a corresponding slave BMS. The MCUs 724, 733, 743, and 754 of the N slave BMSs 720 through 750 may multiply the measured voltage by a predetermined value to generate an ID of each of the N slave BMSs 720 through 750. For example, the MCUs 724, 733, 743, and 754 of the N slave BMSs 720 through 750 may calculate the ID of each of the N slave BMSs 720 through 750 by multiplying the measured voltage by predetermined value based on a number of CAN ID bits.

The MCUs 724, 733, 743, and 754 of the N slave BMSs 720 through 750 may store the generated IDs in each memory of the MCUs 724, 733, 743, and 754, and transmit the generated IDs to the master BMS through a wired or a wireless interface. The master BMS may control the N slave BMSs 720 through 750 by identifying each of the N slave BMSs 720 through 750 using the IDs received from the N slave BMSs 720 through 750.

Referring to FIG. 8, when two battery modules are installed in a battery pack 810, a first slave BMS 820 and a second slave BMS 830 are connected to a first battery module 811 and a second battery module 812, respectively. Remaining slave BMSs 840 and 850, excluding the first slave BMS 820 and the second slave BMS 830, are not connected to a battery module.

Each of N slave BMSs 820 through 850 includes a power supplier, an impedance element, a ground, a connector, and an MCU. The first slave BMS 820 and the second slave BMS 830 to which the battery modules are connected are connected to each other. In the example in FIG. 8, a connector 822 of the first slave BMS 820 connects a power supplier 823 to a front end of a resistor 821, and connects a resistor 831 of the second slave BMS 830 to a back end of the resistor 821. The connector 832 of the second slave BMS 830 connects the resistor 821 of the first slave BMS 820 to a front end of the resistor 831, and connects a ground 833 to a back end of the resistor 831.

When a driving means in which the battery pack 810 is installed is started, the first slave BMS 820 and the second slave BMS 830 are driven, and thus MCUs 824 and 834 generate corresponding IDs.

Also, the MCUs 824 and 834 may generate the IDs at a predetermined point in time after the first slave BMS 820 and the second slave BMs 830 are driven. The predetermined point in time may include a point in time at which at least one of N battery modules installed in the battery pack 810 is removed from the battery pack 810. For example, when the driving means in which the battery pack 810 is installed is initialized, N battery modules may be installed in the battery pack 810 and respective MCUs of the N slave BMSs 820 through 850 may generate corresponding IDs. When battery modules, excluding the first battery module 811 and the second battery module 812, are removed from the battery pack 810, after the driving means is initialized, the MCUs 824 and 834 of the first slave BMS 820 and the second slave BMS 830 generate the IDs. The MCUs 824 and 834 of the first slave BMS 820 and the second slave BMS 830 may transmit the generated IDs to a master BMS. The master BMS may identify a number of battery modules included in the battery pack 810 based on the IDs received from the first slave BMS 820 and the second slave BMS 830.

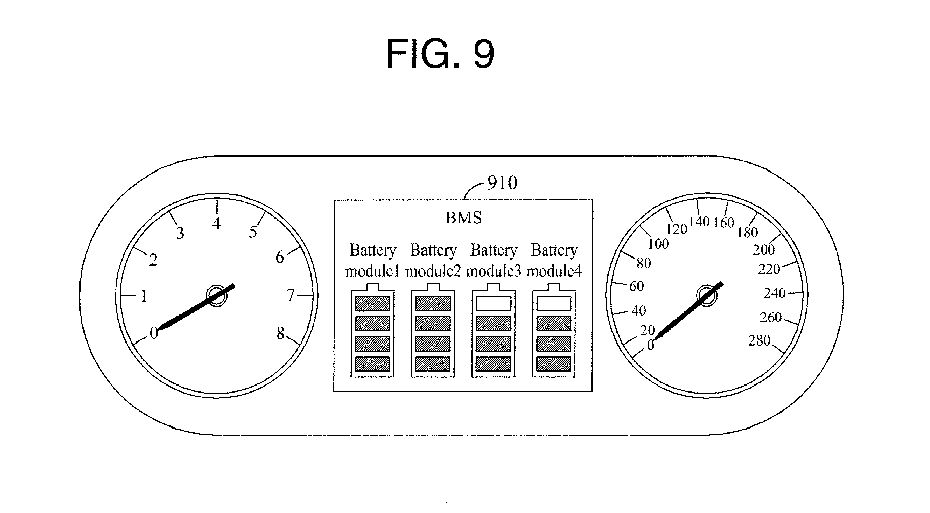

FIG. 9 illustrates an example of an operation of a master BMS and a slave BMS.

Referring to FIG. 9, a master BMS controls a plurality of slave BMSs, and the slave BMSs control a plurality of battery modules. For example, the master BMS may control the slave BMSs to control heat of the battery modules so that the battery modules may have permanently consistent performances, and to control a state of health (SoH), a state of charge (SoC) and a state of function (SoF) of the battery modules.

The master BMS identifies each slave BMS to control the slave BMSs. Thus, each slave BMS generates an ID and transmits the generated ID to the master BMS. The master BMS identifies the slave BMSs using the IDs received from respective slave BMSs. For example, the master BMS may identify a slave BMS transmitting an ID having a greatest value to be a first slave BMS, and a slave BMS transmitting an ID having a smallest value to be a last slave BMS.

The master BMS controls the battery modules based on the identified slave BMSs. For example, the master BMS may detect the SoC of the battery modules through the slave BMSs, and transmit the SoC of the battery modules to an electronic control unit (ECU). The ECU may provide a user with the SoC of the battery modules through a user interface 910.

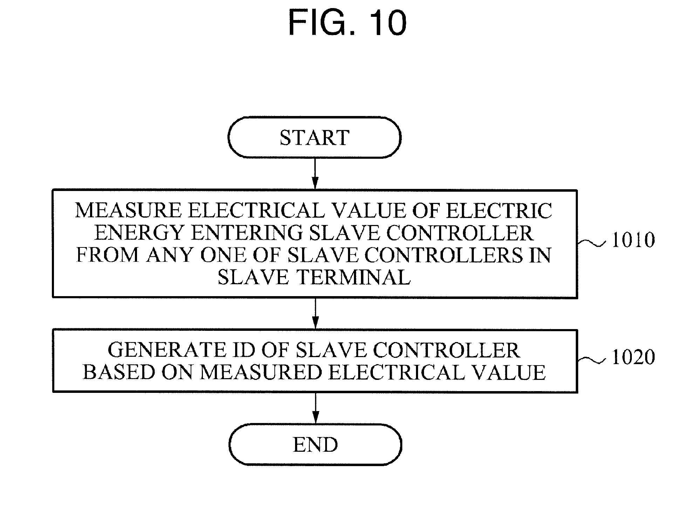

FIG. 10 illustrates an example of an operating method of a slave controller.

Referring to FIG. 10, in 1010, the slave controller measures an electrical value of electric energy entering the slave controller from any one of slave controllers included in a slave terminal.

In 1020, the slave controller generates an ID of the slave controller based on the measured electrical value.

Descriptions provided with reference to FIGS. 1 through 9 are also applicable to the operating method of the slave controller described with reference to FIG. 10, and thus a more detailed description will be omitted here for brevity.

The master controller 110 and the first through Nth slave controllers 130 through 150 in FIG. 1, the processor 260 in FIG. 2, the processor 350 in FIG. 3, the processors 413, 431, 433, and 443 in FIG. 4, the MCUs 724, 733, 743, and 754 in FIG. 7, and the MCUs 824 and 834 in FIG. 8 that perform the various operations described with respect to FIGS. 1-10 may be implemented using one or more hardware components, one or more software components, or a combination of one or more hardware components and one or more software components.

A hardware component may be, for example, a physical device that physically performs one or more operations, but is not limited thereto. Examples of hardware components include resistors, capacitors, inductors, power supplies, frequency generators, operational amplifiers, power amplifiers, low-pass filters, high-pass filters, band-pass filters, analog-to-digital converters, digital-to-analog converters, and processing devices.

A software component may be implemented, for example, by a processing device controlled by software or instructions to perform one or more operations, but is not limited thereto. A computer, controller, or other control device may cause the processing device to run the software or execute the instructions. One software component may be implemented by one processing device, or two or more software components may be implemented by one processing device, or one software component may be implemented by two or more processing devices, or two or more software components may be implemented by two or more processing devices.

A processing device may be implemented using one or more general-purpose or special-purpose computers, such as, for example, a processor, a controller and an arithmetic logic unit, a digital signal processor, a microcomputer, a field-programmable array, a programmable logic unit, a microprocessor, or any other device capable of running software or executing instructions. The processing device may run an operating system (OS), and may run one or more software applications that operate under the OS. The processing device may access, store, manipulate, process, and create data when running the software or executing the instructions. For simplicity, the singular term "processing device" may be used in the description, but one of ordinary skill in the art will appreciate that a processing device may include multiple processing elements and multiple types of processing elements. For example, a processing device may include one or more processors, or one or more processors and one or more controllers. In addition, different processing configurations are possible, such as parallel processors or multi-core processors.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

For example, the software or instructions and any associated data, data files, and data structures may be recorded, stored, or fixed in one or more non-transitory computer-readable storage media. A non-transitory computer-readable storage medium may be any data storage device that is capable of storing the software or instructions and any associated data, data files, and data structures so that they can be read by a computer system or processing device. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, or any other non-transitory computer-readable storage medium known to one of ordinary skill in the art.

Functional programs, codes, and code segments for implementing the examples disclosed herein can be easily constructed by a programmer skilled in the art to which the examples pertain based on the drawings and their corresponding descriptions as provided herein.

While this disclosure includes specific examples, it will be apparent to one of ordinary skill in the art that various changes in form and details may be made in these examples without departing from the spirit and scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

**Claims**

1.  A slave controller comprising:

    a processor configured to generate an identifier of the slave controller based on an electrical value of electric energy, the electric energy being one of:

       electric energy entering an impedance element of said slave controller;
       electric energy in said slave controller having a power supplier configured to supply electric energy; and
       electric energy entering the slave controller from another slave controller in a slave terminal, the slave controller into the electric energy is entered being a slave controller in a terminal.

2.  The slave controller of claim 1, wherein the electrical value is a voltage, and the processor is further configured to calculate the identifier by multiplying a voltage of the electric energy.

3.  The slave controller of claim 1, further comprising a connector configured to connect the slave controller to another slave controller.

4.  The slave controller of claim 3, wherein the connector is further configured to connect, in series, the impedance element of the slave controller to an impedance element of the other slave controller.

5.  The slave controller of claim 4, wherein a difference between an impedance value of the impedance element of the slave controller and an impedance value of the impedance element of the other slave controller is less than or equal to a predetermined threshold, or
    wherein a difference between the identifier of the slave controller and an identifier of the other slave controller corresponds to a difference between the electrical value of the electric energy entering the impedance element of the slave controller and an electrical value of electric energy entering the impedance element of the other slave controller.

6. The slave controller of one of claims 1 to 5, wherein the processor is further configured to transmit the identifier to a master controller.

7. The slave controller of one of claims 1 to 5, further comprising a storage configured to store the identifier.

8. The slave controller of one of claims 1 to 5, wherein the processor is further configured to generate the identifier in response to the slave controller being driven, wherein the identifier is generated at a predetermined point in time after the slave controller is driven.

9. The slave controller of claim 1, wherein the slave controller in said slave terminal further comprises an impedance element into which the electric energy enters from the other slave controller; and
the processor is further configured to measure an electrical value in response to the electric energy entering the impedance element, and generate the identifier based on the measured electrical value,
wherein the slave controller is connected to the other slave controller so that the electric energy enters the impedance element of the slave controller via an impedance element of the other slave controller, or
wherein the slave controller in said terminal further comprises a ground unit configured to electrically ground the electric energy; the slave controller in said terminal being connected to the other slave controller so that the electric energy enters a first terminal of the impedance element; and the ground unit being connected to a second terminal of the impedance element.

10. The slave controller of claim 1, wherein the slave controller having said power supplier further comprises an impedance element into which the electric energy enters;
wherein the processor is further configured to measure an electrical value in response to the electric energy entering the impedance element, and generate the identifier based on the measured electrical value,
wherein the slave controller having said power supplier and another slave controller are in a slave terminal; and the slave controller having said power supplier is connected to the other slave controller so that the electric energy enters an impedance element of the other slave controller via the impedance element of the slave controller.

11. The slave controller of claim 10, wherein the slave controller having said power controller and another slave controller are in a slave terminal;
a first terminal of the impedance element of the slave controller is connected to the power supplier of the slave controller; and
a second terminal of the impedance element of the slave controller is connected to an impedance element of the other slave controller.

12. A battery management system, BMS, comprising:

slave BMSs; and
a master BMS configured to control the slave BMSs;
wherein an Nth slave BMS among the slave BMSs comprises a processor configured to generate an identifier of the Nth slave BMS based on an electrical value of electric energy entering the Nth slave BMS from any other slave BMS among the slave BMSs.

13. The BMS of claim 12, wherein each of the slave BMSs is configured to transmit a respective identifier of the slave BMS generated by the slave BMS to the master BMS, and wherein the master BMS is further configured to identify each of the slave BMSs based on the respective identifiers transmitted by the slave BMSs.

14. A method for generating an identifier of a slave controller, the method comprising:

generating said identifier of the slave controller based on an electrical value of electric energy being one of:

electric energy entering an impedance element of said slave controller;
electric energy in said slave controller having a power supplier configured to supply electric energy; and
electric energy entering the slave controller from another slave controller in a slave terminal, the slave controller into the electric energy is entered being a slave controller in a terminal.

**15.** The method of claim 14 adapted to operate the slave controller of one of claims 1 to 11.

# FIG. 1

# FIG. 2

# FIG. 3

# FIG. 4

# FIG. 5

# FIG. 6

| SLAVE CONTROLLER | VOLTAGE | ID |
|:---:|:---:|:---:|
| #1 | 10 | 20480 |
| #2 | 9 | 18432 |
| ⋮ | ⋮ | ⋮ |
| #9 | 2 | 4096 |
| #10 | 1 | 2048 |

# FIG. 7

EP 2 940 593 A1

FIG. 8

# FIG. 9

910

BMS

Battery module1  Battery module2  Battery module3  Battery module4

# FIG. 10

START

MEASURE ELECTRICAL VALUE OF ELECTRIC ENERGY ENTERING SLAVE CONTROLLER FROM ANY ONE OF SLAVE CONTROLLERS IN SLAVE TERMINAL ~ 1010

GENERATE ID OF SLAVE CONTROLLER BASED ON MEASURED ELECTRICAL VALUE ~ 1020

END

Europäisches
Patentamt

European
Patent Office

Office européen
des brevets

## EUROPEAN SEARCH REPORT

Application Number

EP 15 16 3300

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/185841 A1 (MONREAL GERARDO [AR]) 22 July 2010 (2010-07-22) | 1,14 | INV. G06F13/42 |
| Y | * paragraphs [0039] - [0044], [0053]; figures 4,5,7 * | 1-15 | |
| Y | US 2014/115191 A1 (KIM JIHUN [KR] ET AL) 24 April 2014 (2014-04-24) * abstract * * paragraphs [0039], [0040] * | 1-15 | |
| X | JP 2010 195133 A (SANDEN CORP) 9 September 2010 (2010-09-09) * abstract * | 1,14 | |
| X | EP 2 521 041 A2 (DEERE & CO [US]) 7 November 2012 (2012-11-07) * abstract; figures 1-3 * | 1,14 | |
| X | GB 2 496 886 A (MELEXIS TECHNOLOGIES NV [BE]) 29 May 2013 (2013-05-29) * abstract * * page 3, lines 16-26 * * page 15, line 3 - page 16, line 6 * | 1,14 | TECHNICAL FIELDS SEARCHED (IPC) G06F |
| X | EP 0 806 751 A1 (GEN SIGNAL CORP [US]) 12 November 1997 (1997-11-12) * column 3, lines 51-57; figures 3,4,5 * | 1,14 | |
| X | DE 198 60 465 A1 (JENOPTIK JENA GMBH [DE]) 6 July 2000 (2000-07-06) * abstract * * page 2, lines 38-44; figure 4 * | 1,14 | |

The present search report has been drawn up for all claims

| Place of search | Date of completion of the search | Examiner |
|---|---|---|
| Munich | 25 August 2015 | Jünger, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 3300

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2015

| Patent document cited in search report | | Publication date | Patent family member(s) | | Publication date |
|---|---|---|---|---|---|
| US 2010185841 | A1 | 22-07-2010 | DE 112009004394 T5 | | 24-05-2012 |
| | | | US 2010185841 A1 | | 22-07-2010 |
| | | | US 2012131231 A1 | | 24-05-2012 |
| | | | WO 2010082976 A1 | | 22-07-2010 |
| US 2014115191 | A1 | 24-04-2014 | CN 103891097 A | | 25-06-2014 |
| | | | EP 2747241 A1 | | 25-06-2014 |
| | | | JP 5717266 B2 | | 13-05-2015 |
| | | | JP 2015505415 A | | 19-02-2015 |
| | | | US 2014115191 A1 | | 24-04-2014 |
| | | | WO 2014061841 A1 | | 24-04-2014 |
| JP 2010195133 | A | 09-09-2010 | NONE | | |
| EP 2521041 | A2 | 07-11-2012 | EP 2521041 A2 | | 07-11-2012 |
| | | | US 2012284441 A1 | | 08-11-2012 |
| GB 2496886 | A | 29-05-2013 | GB 2496886 A | | 29-05-2013 |
| | | | US 2013138845 A1 | | 30-05-2013 |
| EP 0806751 | A1 | 12-11-1997 | DE 69710635 D1 | | 04-04-2002 |
| | | | DE 69710635 T2 | | 10-10-2002 |
| | | | EP 0806751 A1 | | 12-11-1997 |
| | | | US 5831546 A | | 03-11-1998 |
| DE 19860465 | A1 | 06-07-2000 | NONE | | |

For more details about this annex : see Official Journal of the European Patent Office, No. 12/82